# EUROPEAN PATENT APPLICATION

(11) **EP 1 727 020 A2**
(43) Date of publication of application: **29.11.2006**
(21) Application number: 06114595.9
(22) Date of filing: 26.05.2006
(51) Int. Cl.: G06F 1/16

(54) **Computer System and Display Apparatus**

(30) Priority: 26.05.2005 KR 20050044700
(71) Applicant: Samsung Electronics Co., Ltd., Yeongtong-gu Suwon-city, Gyeonggi-do 442-742 (KR)
(72) Inventor: LEE, Jae-soon, Gyeonggi-do, Suwon-si (KR); HAN, Jae-jin, Gyeonggi-do (KR); LEE, Joon, Gyeonggi-do (KR); HWANG, Hae-jin, Gyeonggi-do (KR)
(74) Representative: Walaski, Jan Filip

(57) **Abstract**

A computer system includes a computer main body provided with a plurality of main body input-output ports; a monitor main body to display an image; a console stand having a console casing with an accommodating space inside and supporting the monitor main body, console input-output ports outside the console casing and connectable to an external device, an integrated port outside the console casing, and a control module controlling an interface between the integrated port and the console input-output port; and a main body/console cable having main body connectors respectively connected to the main body input-output ports, a console connector connected to the integrated port, an integrated cable electrically connecting the plurality of main body connectors and the console connector.

## Description

The present invention relates to a computer system and a display device, particularly but not exclusively to a display device enabling a computer peripheral device to be conveniently electrically connected to a computer, and a simplified cable structure used to connect the computer, the display device and the computer peripheral device.

Conventionally, a computer system comprises a computer main body, also referred to as a computer, and a display device to receive a video signal from the computer main body to be displayed as an image. The computer main body is provided with various input-output ports for connecting to external devices including the display device, for example, input-output ports of various types which are connectable with a keyboard, a mouse, a printer, a memory card or a memory stick and the like. Examples of such ports include a Personal System/2 (PS/2) port (which is connected with the keyboard or the mouse), a Universal Serial Bus (USB) port (which is connected with the external device supplying a USB interface standard), a video port (which is a D-sub or a Digital Video Interactive (DVI) and the like) to output the video signal to the display device, a memory card slot connected with a memory card, and an Institute of Electrical and Electronics Engineers (IEEE) 1394 port (which is connected with the external device supplying an IEEE 1394 interface standard).

The external devices connected to the USB port, the memory card slot, and the IEEE 1394 port of the foregoing input-output ports are frequently connected or separated to/from each input-output port of the computer main body. That is, generally, the user connects the foregoing external devices in use, and the user separates them in case the user does not use them.

While the computer main body is provided with the input-output ports to connect to the external devices, the ports are positioned where the user cannot easily access them (i.e., generally behind the computer, which is generally located under a desk). Thus, the user is inconvenienced when trying to connect or separate the external device to/from the input-output port.

To solve such inconvenience, conventionally an extension cable that extends the input-output port connections is used to make it easier for the user to approach the input-output ports provided in the computer main body. However, the cable extended from the computer main body, a cable for video connected to the display device and a cable for the keyboard or the mouse may deteriorate the outer appearance of the computer system, and interrupt the operation of the user.

Further, an integrated computer system, which integrates the computer main body and the display device, has been developed. However, with such an integrated computer system, it is not easy to replace or update the computer main body or the display device. Also, it is not easy to make such integrated systems compatible with computer main bodies and/or display devices other than the system computer and display for which the integrated system was originally designed.

Accordingly, embodiments of the present invention provide a computer system and a display device which easily connect with an external device electrically connected with a computer main body, and simplify a structure of a cable used to connect the computer main body, the display device and the external device.

Further, embodiments of the present invention provide a computer system and a display device which is interchangeable with a conventional computer main body or a conventional display.

According to an aspect of the invention, a computer system comprises: a computer main body having a plurality of main body input-output ports; a monitor main body which displays an image generated by the computer main body; a console stand having a console casing with an accommodating space inside and supporting the monitor main body, a plurality of console input-output ports provided outside the console casing and connectable with corresponding external devices, an integrated port provided outside the console casing, and a control module controlling an interface between the integrated port and the console input-output ports; and a main body/console cable having a plurality of main body connectors respectively connected to the plurality of main body input-output ports, a console connector connected to the integrated port, and an integrated cable electrically connecting the plurality of main body connectors and the console connector so as to interconnect the monitor main body, the computer main body, and the console input-output ports through the console stand.

According to an aspect of the invention, the console input-output ports comprises one or more console USB ports of a USB interface standard, one or more console 1394 ports of an IEEE 1394 interface standard, one or more console audio input-output ports to input and output of an audio signal, one or more console memory card slots connected with a memory card of a predetermined standard, or combinations thereof.

According to an aspect of the invention, the control module comprises: a USB hub which controls a signal exchange according to the USB interface standard through the one or more console USB ports and the one or more console 1394 ports; and a USB/audio converter which converts a signal between a USB interface standard and an audio standard such that a signal of the USB interface standard output from the USB hub is converted into an audio signal and the audio signal is output through the one or more console audio input-output ports, and the audio signal input through the one or more console audio input-output ports is converted into the signal according to the USB interface standard and the signal is output to the USB hub.

According to an aspect of the invention, the control module further comprises an optical disc module accommodated inside the console casing and exchanging the signal with the USB hub through the USB interface standard.

According to an aspect of the invention, the optical disc module comprises an optical disc drive which receives and transfers data with respect to an optical disc; an ATA controller forming data read by the optical disc drive to the signal of an ATA interface standard; and a USB/ATA converter to convert between a signal of the ATA interface standard of the ATA controller and a signal of the USB interface standard of the USB hub.

According to an aspect of the invention, the main body input-output port comprises a main body video port output with a video signal transferred to the monitor main body, one or more main body USB ports of the USB interface standard, one or more main body 1394 ports of the IEEE 1394 interface standard, and one or more main body control ports to input and output a predetermined control signal; and the main body connector console cable comprises one or more video connectors connected to the main body video port, one or more USB connectors connected to the one or more main body USB ports, one or more 1394 connectors connected to the one or more main body 1394 ports, and one or more control connectors connected to the one or more main body control ports.

According to an aspect of the invention, the main body control port and the control signal connector have a connect structure of a D-Sub connector standard having 15 pins.

According to an aspect of the invention, the integrated cable comprises a plurality of unit signal lines connected to the pins used to transfer the signal between each pin of the video connector, the USB connector, and the 1394 connector, and the control connector; and the console connector comprises a plurality of signal pins respectively connected to the plurality of unit signal lines.

According to an aspect of the invention, at least one of the unit signal lines is allocated to transfer a standby power of a predetermined voltage level supplied from the computer main body to the console stand.

According to an aspect of the invention, the integrated cable further comprises a shield cover shielding the plurality of unit signal lines; and each of the video connector, the USB connector, the 1394 connector, and the control signal connector comprise a ground pin grounded on the shield cover.

According to an aspect of the invention, the computer main body comprises a power supplier and a power output port which outputs DC power of a predetermined voltage level; the console stand further comprises a power input port to receive the DC power output from the power output port; and the main body/console cable further comprises a main body connect jack connected to the power output port, a console connect jack connected to the power input port, and a DC power cord connecting the main body connect jack and the console connect jack and supplying the DC power output from the computer main body through the power output port to the console stand through the power input port.

According to an aspect of the invention, the power input port of the console stand and the console connect jack of the main body/console connecting cable have a DC connect structure of a commercial power adapter.

According to an aspect of the invention, the console stand further comprises a monitor power supply line for transferring the DC power input through the power input port to the monitor main body.

According to an aspect of the invention, the console stand further comprises a DC/DC converter converting the DC power input through the power input port into a plurality of DC power lines with different voltage levels and supplying the plurality of DC power lines to at least the control module and/or the console input-output port.

According to an aspect of the invention, the voltage level of the DC power input to the DC/DC converter comprises a voltage level of the DC power output from the power output port and a voltage level of the DC power output from the commercial power adapter.

According to an aspect of the invention, the control module further comprises: at least one booting selection button provided outside the console casing; and a microcomputer transferring a control signal corresponding to a selection input using the booting selection button to the computer main body through the main body/console cable.

According to an aspect of the invention, the computer main body further comprises a start up executive part to start up the computer main body, the monitor main body, the console stand or combinations thereof according to one of a plurality of start up routines with respect to a plurality of start up modes; the microcomputer comprises a general purpose input output (GPIO) pin connected to the start up executive part through the integrated port, the console connector, the integrated cable, the control connector, and the main body control port; and the microcomputer applies the appropriate control signal to the start up executive part through the GIPO pin, where a preset one of the plurality of start up modes is selected through the booting selection buttons, and the start up executive part starts up the computer main body, the monitor main body, the console stand, or combinations thereof according to the start up routines corresponding to the control signal from the GIPO pin of the microcomputer.

According to an aspect of the invention, the control module further comprises at least one LED provided outside the console casing and which is switched between on and off; and the microcomputer controls switching the LED between on and off according to an operating state of the computer main body, the monitor main body, the console stand, or combinations thereof.

According to an aspect of the invention, the control module further comprises a wireless signal receiver to receive a wireless signal; and the microcomputer transfers the control signal corresponding to the wireless signal received through the wireless signal receiver to the computer main body through the integrated port, the console connector, the integrated cable, the control connector, and the main body control port.

According to an aspect of the invention, the console stand further comprises: a first printed circuit board accommodated in the console casing and which includes one or more USB/audio converters and the USB hubs; a second printed circuit board accommodated in the console casing and which includes the microcomputer, the LED, the wireless signal receiver, and the booting selection button; and a third printed circuit board accommodated in the console casing and which includes the ATA controller and/or the USB/ATA converter.

According to an aspect of the invention, the console stand further comprises a console video port to receive a video signal of a predetermined format; and the format of the video signal input through the console video port is different from a format of the video signal input through the integrated port.

According to an aspect of the invention, the console casing comprises: a lower case; an upper case coupled to the lower case from an upper part of the lower case and forming an accommodation space housing the control module and the optical disc module; a link member having a first side fastened to the monitor main body and a second side fastened to the lower case and supporting the monitor main body; and a rear cover formed with a pass through hole allowing the link member to pass through to fasten at the lower case, and covering a rear upper part of the lower case.

According to an aspect of the invention, the computer system further comprises a speaker grill provided in the rear cover; and a speaker disposed inside the speaker grill of the rear cover and outputting the audio signal from the USB/audio converter.

According to an aspect of the invention, a display apparatus capable of connecting with an external device for a computer main body, comprises a monitor main body which displays an image; a console casing supporting the monitor main body; a plurality of console input-output ports provided outside the console casing and connectable to the external device; an integrated port provided outside the console casing and which inputs and outputs a predetermined signal comprising a video signal applied from the computer main body; and a control module transferring the video signal received through the integrated port of the monitor main body, and outputting a signal input from the computer main body through the integrated port to the external device connected to one of the plurality of console input-output ports, and outputting a signal input from the external device connected to the console input-output ports to the computer main body through the integrated port.

According to an aspect of the invention, the console input-output ports comprise one or more console USB ports of a USB interface standard, one or more console 1394 ports of an IEEE 1394 interface standard, one or more console audio input-output port to input and output an audio signal, and one or more console memory card slots connectable to a memory card of a predetermined standard.

According to an aspect of the invention, the control module comprises at least one USB hub controlling a signal exchange according to the USB interface standard through the one or more console USB ports and/or the one or more console 1394 ports; and a USB/audio converter converting a signal of the USB interface standard output from the USB hub into the audio signal and outputting the audio signal through the console audio input-output port, and converting the audio signal input through the console audio input-output port into the signal of the USB interface standard and outputting the signal to the at least one USB hub.

According to an aspect of the invention, the control module further comprises an optical disc module accommodated inside the console casing and exchanging the signal through the at least one USB hub and the USB interface standard.

According to an aspect of the invention, the optical disc module comprises: an optical disc drive to transfer data with respect to an optical disc; an ATA controller forming data read by the optical disc drive into a signal of an ATA interface standard; and a USB/ATA converter to convert between the signal of the ATA interface standard of the ATA controller and the signal of the USB interface standard of the at least one USB hub.

According to an aspect of the invention, the integrated port comprises a plurality of video signal receiving pins to receive the video signal, a plurality of USB signal pins to input and output the signal according to the USB interface standard, and at least one control signal pin to input and output a predetermined control signal between the control module and the computer main body, and one or more of the video signal, the signal according the USB interface standard, and the control signal are grounded on a shield cover of a predetermined integrated cable connected to the integrated port.

According to an aspect of the invention, the integrated port comprises at least one standby power input pin to receive standby power of a predetermined voltage level supplied from the computer main body.

According to an aspect of the invention, the display apparatus further comprises a power input-output port provided outside the console casing and receiving DC power of the predetermined level; a DC/DC converter converting the DC power input through the power input port into a plurality of DC power lines with different voltage levels each other, and supplying the plurality of DC power lines to at least the control module and/or the console input-output port; and
a monitor power supply line for transferring the DC power input through the power input port to the monitor main body.

According to an aspect of the invention, the power input port has a DC connect structure of a commercial power adapter.

According to an aspect of the invention, the control module further comprises: at least one booting selection button provided outside the console casing; and a microcomputer transferring the control signal input using the at least one booting selection button to the computer main body through the integrated port.

According to an aspect of the invention, the microcomputer comprises a general purpose input output (GPIO) pin to reverse a logical value when a preset one of start up modes of the computer main body is selected through the booting selection button, and the GPIO pin is connected to one of the control signal pins of the integrated port.

According to an aspect of the invention, the control module further comprises at least one LED provided outside the console casing; and the microcomputer receives information with respect to an operating state of the computer main body through the integrated port, and controls the LED to be switched between on and off according to the operating state of the computer main body, the monitor main body, the console stand, or combinations thereof.

According to an aspect of the invention, the control module further comprises a wireless signal receiver to receive a wireless signal; and the microcomputer transfers the control signal corresponding to the received wireless to the computer main body through the integrated port.

According to an aspect of the invention, the display apparatus further comprises a first printed circuit board accommodated in the console casing and which includes the USB/audio converter and the USB hub; a second printed circuit board accommodated in the console casing and which includes the microcomputer, the LED, the wireless signal receiver, and the booting selection button; and a third printed circuit board accommodated in the console casing and the ATA controller and/or the USB/ATA converter.

According to an aspect of the invention, the console stand further comprises a video port to receive a video signal of a predetermined format; and the format of the video signal input through the video port is different from a format of the video signal input through the integrated port.

According to an aspect of the invention, the console casing comprises: a lower case; an upper case coupled to the lower case from an upper part of the lower case and forming an accommodation space housing the control module and the optical disc module; a link member having a first side fastened to the monitor main body and a second side fastened to the lower case and supporting the monitor main body; and a rear cover having a pass through hole allowing the link member to pass through to fasten to the lower case and covering a rear upper part of the lower case.

According to an aspect of the invention, the display apparatus further comprises: a speaker grill provided on the rear cover, and a speaker disposed inside the speaker grill of the rear cover and outputting the audio signal from the USB/audio converter.

According to an aspect of the invention, a main body/console connecting cable for use in connecting a display device, connecting an external device of a predetermined interface standard, and a computer main body, the cable comprises: a main body connector having a video connector connectable to the computer main body and which receives a video signal on a predetermined video standard output from the computer main body, at least one input-output connector of a predetermined input-output interface standard connectable to the computer main body, and a control connector for which exchanges a predetermined control signal between the computer main body and the display device; a console connector having a plurality of video signal pins connectable to the display device, a plurality of input-output signal pins connectable between the input-output connector and the display device, and a plurality of control pins connectable to the display device; and an integrated cable having a plurality of unit signal lines connectable between the main body connector and the console connector, and a shield cover which shields the unit signal lines and is grounded with at least one of ground pins allocated on the console connector and the main body connector, wherein the unit signal lines connect the video connector and the video signal pins, the at least one input-output connector and the input-output signal pins, and the control connector and the control pins.

According to an aspect of the invention, the input-out connector comprises a signal pin of the input-output interface standard, a power supply pin, and a ground pin; one of the input-output signal pins of the console connector is allocated to only correspond to the signal pin of the input-output connector, and another one of the input-output signal pins of the console connector is allocated only to correspond to the ground pin of the input-output connector.

According to an aspect of the invention, reserved pins according to each standard of the video connector and the input-output connector are not allocated to the pin of the console connector.

According to an aspect of the invention, the main body/console connecting cable further comprises a main body connect jack connectable to the computer main body, a monitor connect jack connectable to the display device, and a DC power cord capable of supplying DC power of a predetermined voltage level output from the computer main body to the display device.

According to an aspect of the invention, the shield cover shields the unit signal lines connecting between the video connector and the video signal pins, the unit signal lines between the input-output connector and the input-output signal pins, and the unit signal lines between the connector and the control pins, by a unit of the unit signal lines.

According to an aspect of the invention, the input-output connector comprises at least one of at least one USB connector of the USB interface standard and/or the 1394 connector of the IEEE 1394 interface.

According to an aspect of the invention, the video connector has a connect structure of a D-Sub connector standard.

According to an aspect of the invention, the control connector has a connect structure of a D-Sub connector standard.

According to an aspect of the invention, a computer system interconnection device, comprises: a console casing having an integrated port and console input-output ports of different types and which are connectable with corresponding external devices and/or storage devices; a control module inside the console casing and controlling data exchanged between the integrated port and the console input-output ports; and a cable connected to the integrated port and connectable with a computer, the cable having a plurality of main body connectors connectable to main body input-output ports of different types of the computer, a console connector connected to the integrated port, and an integrated cable electrically connecting the main body connectors and the console connector so as to interconnect the computer and the console input-output ports.

According to an aspect of the invention, the input-output port types are combinations of ports of different standards so as to be compatible with at least two interface standards.

According to an aspect of the invention, the different standards comprise combinations of a USB standard, an IEEE 1394 standard, a data memory medium standard, an audio standard, a video standard, and a display monitor standard.

According to an aspect of the invention, the control module further comprises a hub of one of the different standards and which transfers data with respect to a plurality of the console input-output ports and the integrated port using the one standard, and a controller that controls the data transfers between the integrated port and the hub.

According to an aspect of the invention, the hub is compliant with the USB standard.

According to an aspect of the invention, one of the console input-output ports comprises a drive which receives a data memory medium, another one of the console input-output ports is an interface of one of the USB and the IEEE 1394 standards, and a further one of the console input-output ports is an interface of one or more of the audio standard, the video standard, and the display monitor standard.

According to an aspect of the invention, the computer system interconnection device, wherein: the console casing further comprises a display support connectable to a display, and one of the console input-output ports is connectable to the display such that display signals from the computer are sent through the cable to be displayed on the display.

According to an aspect of the invention, the console casing further comprises a power supply controller which controls the computer to be turned on when in a first state and turned off when in a second state.

According to an aspect of the invention, the power supply controller further receives power from the computer through the integrated port.

According to an aspect of the invention, the power supply controller further controls a display to be turned on when in a third state and turned off when in a fourth state using the power received from the computer.

According to an aspect of the invention, the console casing further comprises a display support connectable to the display, and one of the console input-output ports is connectable to the display such that display signals from the computer are sent through the cable to be displayed on the display.

According to an aspect of the invention, the console casing further comprises an audio interface unit which transfers audio data between an audio device and the computer.

According to an aspect of the invention, the audio device comprises a speaker which outputs the audio data, a headphone jack which outputs the audio data, and/or an microphone which inputs the audio data into the computer.

Additional aspects and/or advantages of the invention will be set forth in part in the description which follows and, in part, will be obvious from the description, or may be learned by practice of the invention.

Embodiments of the invention will now be described, by way of example, with reference to the accompanying drawings, in which:
Figure 1 is a view illustrating elements of a computer system according to an embodiment of the present invention;
Figure 2 is a rear perspective view of a computer main body of Figure 1;
Figure 3 is a block diagram of the computer main body of Figure 1;
Figure 4 is an exploded perspective view of the console casing of the computer system illustrated in Figure 1;
Figure 5 illustrates part of the console casing of the computer system illustrated in Figure 1;
Figures 6 to 8 illustrate side views of the console casing of Figure 1;
Figure 9 is a block diagram of the console stand of the computer system illustrated in Figure 1;
Figure 10 illustrates the operation of a booting selection button provided in the console stand of Figure 1;
Figure 11 illustrates the power supply system of the console stand of Figure 1;
Figure 12 illustrates the pin structure of an integrated port according to an embodiment of the present invention;
Figure 13 illustrates a main body/display connecting cable according to an embodiment of the present invention; and
Figure 14 is a cross-sectional view of the cable illustrated in Figure 13, taken along line X-X of Figure 13.

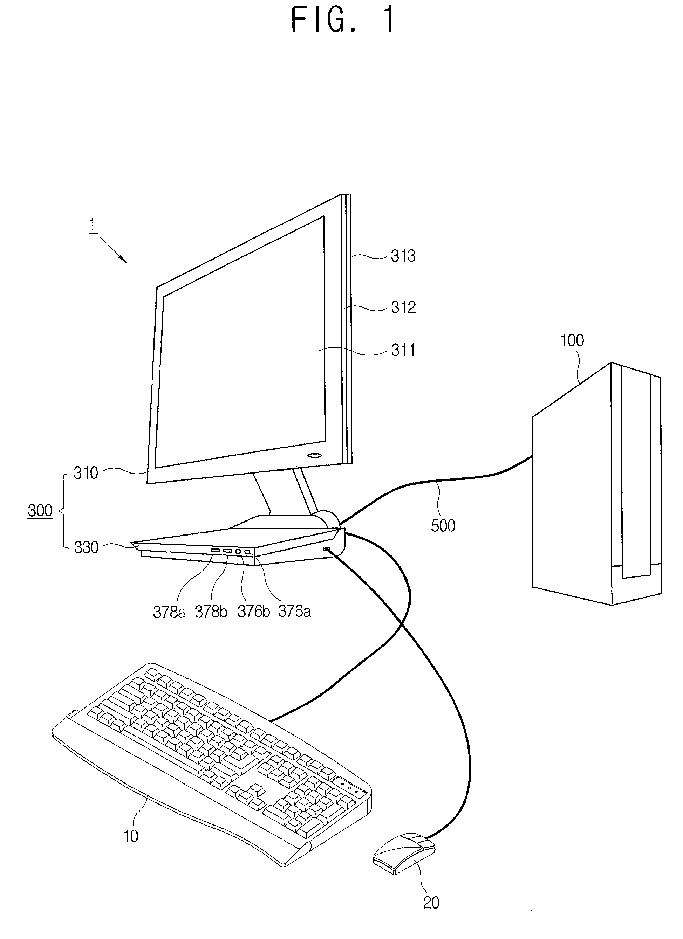

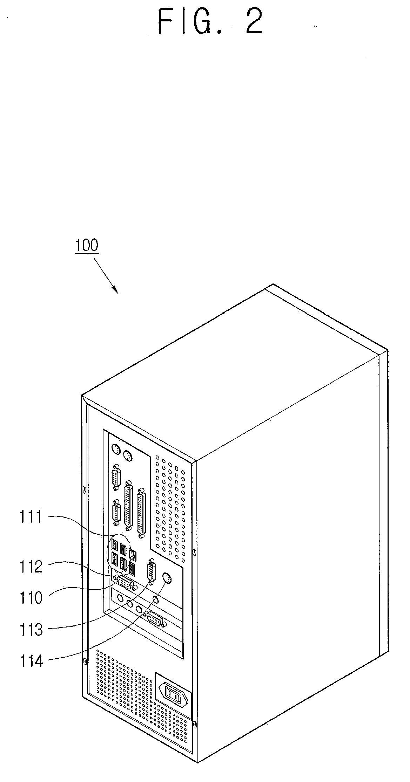

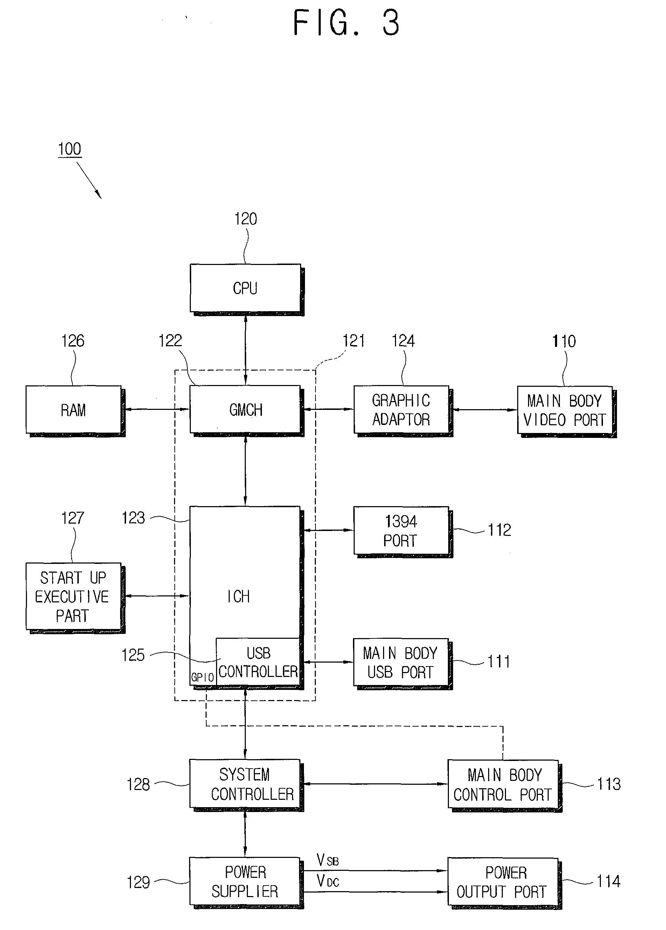

As shown in Figure 1, a computer system 1 according to an embodiment of the present invention comprises a computer main body 100, also referred to as a computer, a display device 300, and a main body/console connecting cable 500 connecting the computer main body 100 and the display device 300. The computer main body 100 is provided with a plurality of main body input-output ports. The main body input-output ports, as shown in Figures 2 and 3, are provided in an area at the rear of the computer main body 100 in one embodiment. Alternately, the main body input-output ports may be provided on other areas, such as an area in the front or a lateral side of the computer main body 100 according to aspects of the invention.

While not required in all aspects, the illustrated main body input-output ports provided in the computer main body 100 comprise a main body video port 110 to output a video signal to the display device 300, at least one main body USB port 111 configured to operate according to a USB interface standard, and a main body 1394 port 112 configured to operate according to an IEEE 1394 interface standard. The main body input-output ports also comprise a main body control port 113 to input and output a predetermined control signal. Herein, the main body control port 113 is used to enable the communication of a control signal between a system controller 128 (see Figure 3) of the computer main body 100 and the display device 300. However, it is understood that other arrangements are possible, and that other interface standards can be used in place of or in addition to the USB and IEEE 1394 examples provided.

As shown in Figure 3, the computer main body 100 according to the illustrated embodiment of the present invention comprises a main chipset 121 having a Central Processing Unit (CPU) 120, a Graphic Memory Control Hub (GMCH) 122, and an Input-Output Control Hub (ICH) 123, a graphic adaptor 124 connected to the GMCH 122 and outputting the video signal through the main body video port 110, a random access memory (RAM) 126, and a system controller 128. The ICH 123 includes a USB controller 125 controlling one or more signals input and output via the main body USB port 111. Herein, the USB controller 125, as shown in Figure 3, may be provided as one function of the ICH 123, or a respective chipset separate from the ICH 123.

The system controller 128 is connected to the ICH 123 and controls the power supply of the computer main body 100 and the other input-output signals. Herein, the system controller 128 controls the power supply provided by a power supplier 129, which supplies the power to the system. The computer main body 100 is provided with a power output port 114 to output direct current (DC) power of a predetermined voltage level output from the power supplier 129. The DC power output through the power output port 114 is supplied to the display device 300 through the main body/console connecting cable 500. A predetermined power level output from the power supplier 129 of the computer main body 100 (i.e., a standby power (V_{SB}) of 5V DC) may be supplied to the display device 300 through the main body/console connecting cable 500. Moreover, it is understood that the power supplier 129 can further utilize battery power, such as when the computer 100 is a portable computer.

Referring to Figure 1, the display device 300 according to the illustrated example of the present invention comprises a monitor main body 310 and a console stand 330 supplying signals to the monitor main body 310. The monitor main body 310 comprises a display module 311, a front case 312 with an openning at the front via which images produced by the display module 311 are externally viewable, and a rear case 313 coupled with the front case 312 to accommodate the display module 311. The display module 311 comprises a display panel (not shown) such as a Liquid Crystal Display (LCD), and an image processor (not shown) which processes the video signal provided by the computer main body 100 and displays the resulting image on the display panel.

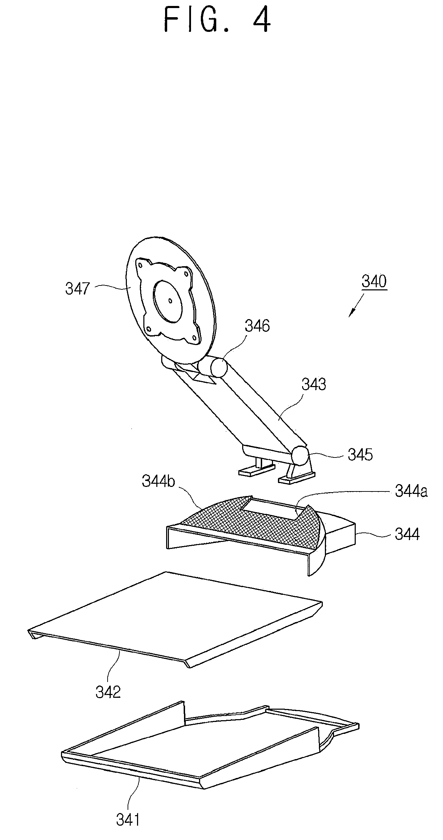

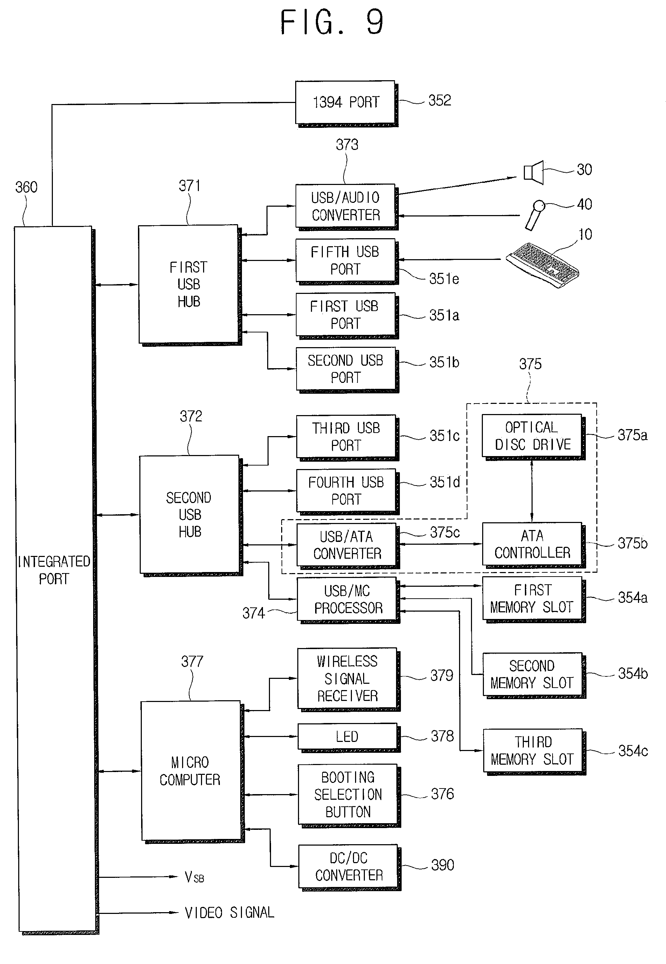

The console stand 330 is coupled with the monitor main body 310 and supports the monitor main body 310. As shown in Figures 4 through 8, the console stand 330 according to the illustrated embodiment of the present invention comprises a console casing 340 formed with an internal accommodating space, a plurality of console input-output ports of different standards, and an integrated port 360 provided on the outside of the console casing 340. A control module (shown in Figure 9) is accommodated inside the console casing 340. While shown in the context of an LCD, it is understood that aspects of the invention can be utilized with CRTs and other types of flat panel displays. Moreover, it is understood that the console stand 330 can be provided separately from the monitor main body 310 and need not be provided as part of a unified display device 300.

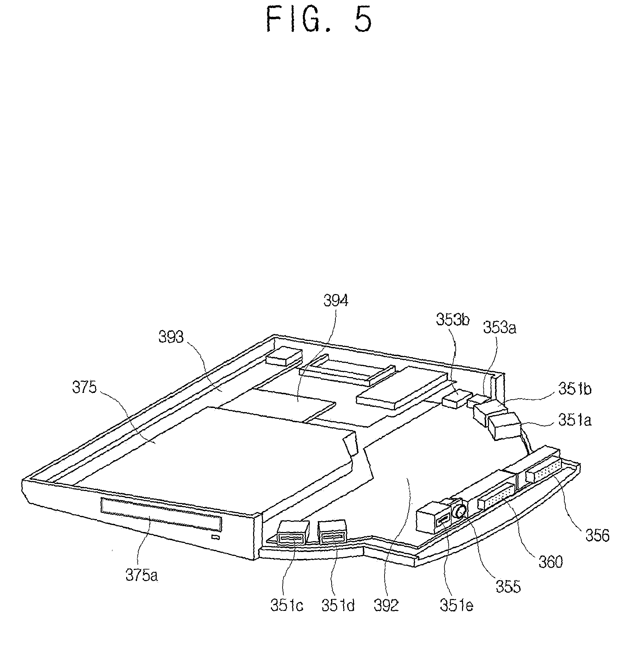

As shown in Figure 4, the console casing 340 comprises a lower case 341, an upper case 342, a link member 343, and a rear cover 344. The lower case 341 is coupled with the upper case 342, and forms the accommodating space for accommodating the control module and an optical disc module 375 (see Figure 5). A first end of the link member 343 is fastened to a rear surface of the rear case 313 of the monitor main body 310, and a second end side thereof is fastened to the lower case 341 and supports the monitor main body 310. The link member 343 comprises a lower hinge part 345 to enable the link member 343 to rotate with respect to a planar surface of the lower case 341, and an upper hinge part 346 to enable the link member 343 and the monitor main body 310 to rotate relative to each other. Accordingly, the height of the monitor main body 310 is adjustable, and the monitor main body 310 is tiltable with respect to the console casing 340. However, it is understood that other connection schemes can be utilized to make the link member 343 adjustable.

The first end of the link member 343 is provided with a fastening plate 347. The plate 347 is fastened to the rear case 313 of the monitor main body 310 and rotatably connects the monitor main body 310 and the link member 343.

As shown in Figure 4, the rear cover 344 covers a rear upper part of the lower case 341. The rear cover 344 is formed with a through hole 344a through which the link member 343 passes to fasten to the lower case 341. Furthermore, on a side facing the monitor main body 310, the rear cover 344 includes a speaker grill 344b. Inside the speaker grill 344b is disposed a speaker 30 shown in Figure 9,for outputting an audio signal provided from a USB/audio converter 373.

However, it is understood that the grill 344b need not be so located and can, for instance, be omitted entirely in cases where the speaker 30 is not required. Moreover, it is understood that the USB/audio converter 373 or another connector can be used to transfer audio signals between the computer system 1, such as when using a dock used with a digital audio/video storage device like an IPOD™ or the YEPP™ player.

As shown in Figures 5 to 8, the console input-output ports according to the illustrated embodiment of the present invention are provided on the outside of the console casing 340. While not required in all aspects, the illustrated console input-output ports comprise console USB ports 351a, 351b, 351c, 351d, 351e arranged to operate according to the USB interface standard, a console 1394 port 352 according to the IEEE 1394 interface standard, audio input-output ports 353a, 353b to input and output the audio signal, and memory card slots 354a, 354b, 354c, each for receiving one or more memory cards of predetermined standards. Other types of ports using other standards can be used instead of or in addition to the illustrated ports.

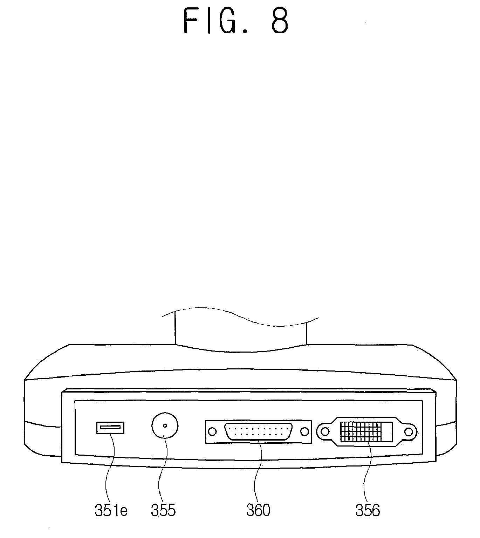

The console USB ports 351a, 351b, 351c, 351d according to the embodiment of the present invention as shown in Figures 5 through 7 are provided in pairs, respectively, in opposite sides of the console casing 340. The remaining console USB port 351e, as shown in Figure 8, is provided in the rear of the console casing 340. As shown in Figure 1, among the external devices, the keyboard 10 is connected to the console USB port 351e provided in the rear of the console casing 340, and the mouse 20 is connected to the console USB port 351a provided in the right-hand side of the console casing 340, when viewed from the front. Further, the console 1394 port 352 according to the illustrated embodiment of the present invention is provided in the left-hand side of the console casing 340. It is understood that additional console 1394 ports can be used.

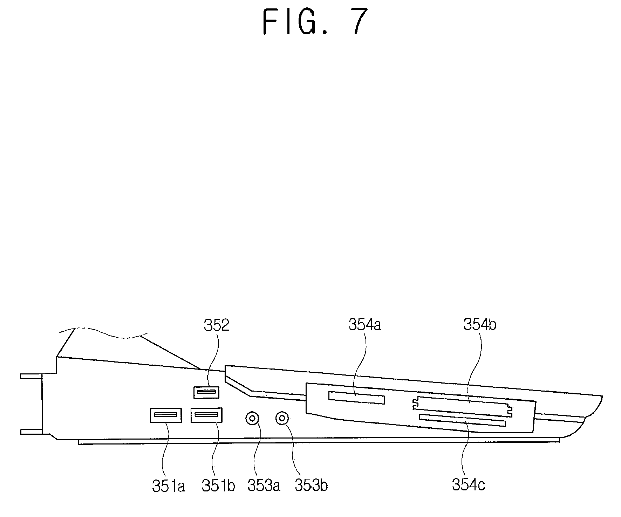

The audio input-output ports 353a, 353b according to the illustrated embodiment of the present invention are provided in the left-hand side of the console casing 340 when viewed from the front, as shown in Figure 7. The audio input-output ports 353a, 353b comprise an earphone terminal 353a for outputting an audio signal to headphones, and a microphone terminal 353b for receiving audio signals from external devices such as a microphone. Furthermore, one or both of the audio input-output ports 353a, 353b may comprise a Sony/Philips Digital Interface (S/PDIF) terminal and/or an optical terminal (not shown) to input/output a digital audio signal. Moreover, it is understood that such ports 353a, 353b can be used as audio input/output ports for use in voice over internet protocol (VOIP) applications, in which case the stand 330 can further include a corresponding phone dock.

The memory card slots 354a, 354b, 354c according to the present invention shown in Figure 7 are provided on the left side of the console casing 340. At least two or more of the memory card slots 354a, 354b, 354c are provided in the present example, although this will be dependent on the kinds of memory cards that are to be accepted. For example, as shown in Figure 7, an area of the left side of the console casing 340 is provided with a first memory card slot 354a for receiving a Memory Stick (MS), a MS Pro, a Secure Digital (SD) card and a Multi Media Card (MMC), a second memory card slot 354b for receiving a Compact Flash (CF) and Microdrive (MD), and a third memory card slot 354c for receiving a Smart Media Card (SMC), and xD Picture Card. It is understood that alternative and/or additional types of card readers can be used.

As shown in Figures 5, 8, and 13 the integrated port 360 is provided at the rear of the console casing 340. The integrated port 360 is connected to a display connector 520 of the main body/console connecting cable 500 thus enabling video signals etc., which are to be transferred from the computer main body 100 to the monitor main body 310 and the control module, to be transferred via the main body/console connecting cable 500. Control signals input and output to and from the external devices connected to the console input-output ports, and passing through the control module, are also transferred to and from the computer main body 100 via the main body/console connecting cable 500.

The control module controls the interface between the integrated port 360 and the console input-output ports. The control module according to the present invention shown in Figure 9 comprises first and second USB hubs 371, 372, and the USB/audio converter 373. The first USB hub 371 and the second USB hub 372 control signals transferred, in accordance with the USB interface standard, through the console USB ports 351a, 351b, 351c, 351d. The console 1394 port 352 is shown as connected to the integrated port 360 so as to interact with the main body 1394 port 112. The first USB hub 371 and the second USB hub 372 are also electrically connected with the computer main body 100 via the integrated port 360. The USB hubs 371, 372 can be of the same or different versions of the USB standard. Moreover, it is understood that the console 1394 port 352 can be connected through one of the USB hubs, and can further include a converter to convert the 1394 interface signals to be USB compliant.

In the illustrated embodiment of the present invention, the first USB hub 371 is connected with two console USB ports 351a, 351b (hereinafter referred to as a first console USB port 351a and a second console USB port 351b) and the second USB hub 372 is connected with two console USB ports 351c, 351d (hereinafter referred to as a third console USB port 351c and a fourth console USB port 351d). Further, the console USB port 351e provided in the rear of the console casing 340 (hereinafter referred to as a fifth console USB port 351 e) is connected to the first USB hub 371.

The USB/audio converter 373 is connected with the first USB hub 371, and converts signals according to the USB interface standard output from the first USB hub 371 into audio signals. The USB/audio converter 373 outputs the converted audio signal externally via the earphone terminal 353a and/or the speaker 30. The audio signal output through the earphone terminal 353a and/or the speaker 30 is input to the first USB hub 371 as a USB interface standard signal via the integrated port 360 from the computer main body 100.

Furthermore, the USB/audio converter 373 converts the audio signal input through the microphone 40 connected to the microphone terminal 353b, into a signal in accordance with the USB interface standard and outputs the converted signal to the first USB hub 371. The first USB hub 371 transmits the signal of the USB interface standard corresponding to the audio signal from the USB/audio converter 373 to the computer main body 100 through the integrated port 360. The USB/audio converter 373 exchanges digital audio signals input and output through the S/PDIF terminals, with the computer main body 100 via the first USB hub 371 and the integrated port 360, thereby inputting or outputting the digital audio signals.

While not required in all aspects, the control module further comprises an USB/MC processor 374, which controls the signal exchange between the memory card slots 354a, 354b, 354c and the second USB hub 372.

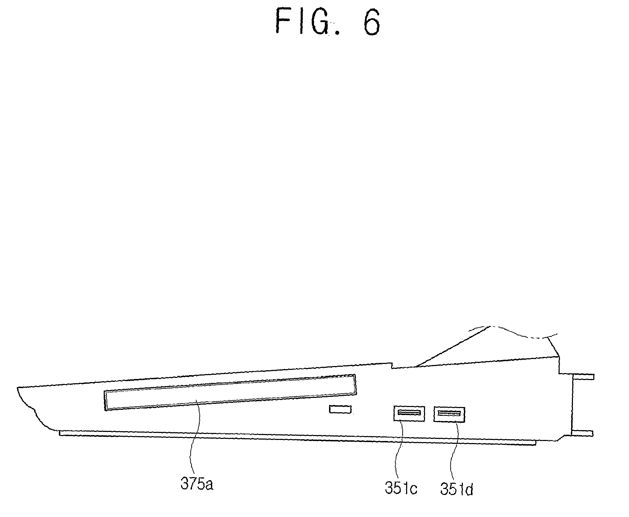

The console stand 330 according to the embodiment of the present invention shown in Figure 9 further comprises the optical disc module 375, which communicates signals through the second USB hub 372 in the USB interface standard. The optical disc module 375 is accommodated into an area inside the console casing 340 (refer to Figure 5). The optical disc module 375 according to the illustrated embodiment of the present invention comprises an optical disc drive 375a inserted with the optical disc module, an Advanced Technology Attachment (ATA) controller 375b for converting data, which is read by the optical disc drive 375a, into a signal in the ATA interface standard, a USB/ATA converter 375c for converting signals between the ATA interface standard of the ATA controller 375b and the USB interface standard. The optical disk holding tray of the optical disc drive 375a, as shown in Figures 5 and 6, is accommodated into the console casing 340 such that it is exposed to the right side of the console casing 340. While shown as connected to the USB hub, it is understood that the audio, optical disc, and/or other output can be connected to the console 1394 port 352.

As shown in Figure 9, the control module comprises at least one booting selection button 376 (refer to Figure 1) provided in the outside of the console casing 340, and a microcomputer 377 accommodated inside the console casing 340. When the booting selection button 376 is selected, for instance pressed by a user, the microcomputer 377 sends a control signal corresponding to the selected booting selection button 376 to the computer main body 100 through the integrated port 360 and the main body/console connecting cable 500. While described as a button 376, it is understood that the button 376 can include a button array 376 including multiple buttons, or can be a button or switch with a number of positions for use in creating different signals.

The booting selection button 376 is used to select one of a plurality of start up routines performed in booting (i.e., starting) the computer main body 100. When the user selects the booting selection button 376, the microcomputer 377 transfers the control signal corresponding to the selected booting selection button 376 to the computer main body 100 through the integrated port 360 and the main body/console connecting cable 500. The computer main body 100 starts up according to the start up routine corresponding to the appropriate control signal.

While not required in all aspects, the computer main body 100 comprises a start up executive part 127 (refer to Figure 3) for starting up the computer main body 100 according to any one among the start up routines corresponding to a plurality of start up modes. The start up executive part 127 is a Basic Input Output System (BIOS) stored at a BIOS ROM provided in the computer main body 100. The routine controlling the initial start of the computer main body 100 regardless the name may be include at the start up routine according to aspects of the present invention.

The start up modes executed in the computer main body 100 comprise a main start up mode started up by a main operating system of the computer main body 100, and an auxiliary start up mode for starting up the computer main body 100 with limited functionality (e.g., only having the function of reproducing multimedia files). The start up executive part 127 can supply the power only to those electric components involved in the performance of the functions of the auxiliary start up mode, in the initial start of the computer main body 100, in the case that the control signal corresponding to the performance of the auxiliary start up mode from the microcomputer 377 of the console stand 330 is sensed.

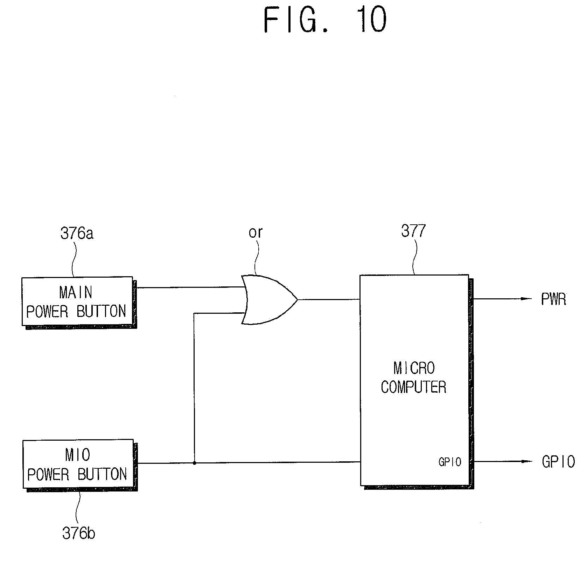

Herein, the microcomputer 377 transferring the control signal which informs that any start up mode of the main start up mode and the auxiliary start up mode is to be performed will be described with reference to Figure 10. An outside front surface of the console casing 340 is provided with the booting selection button 376 for selecting the main start up mode (hereinafter referred to as the main power button 376a), and the booting selection button 376 for selecting the auxiliary start up mode (hereinafter referred to as a MIO power button 376b). At this time, the microcomputer 377 outputs the control signal (PWR) informing that the power of the computer system 1 is to be turned on, to the computer main body 100 through the integrated port 360, in case where any one of the main power button 376a and the MIO power button 376b is selected. The signal corresponding to the selection of the main power button 376a and the MIO power button 376b is logically added through an OR gate (OR) and then is applied to the microcomputer 377, so that the selection of any one of two buttons is recognized through the microcomputer 377.

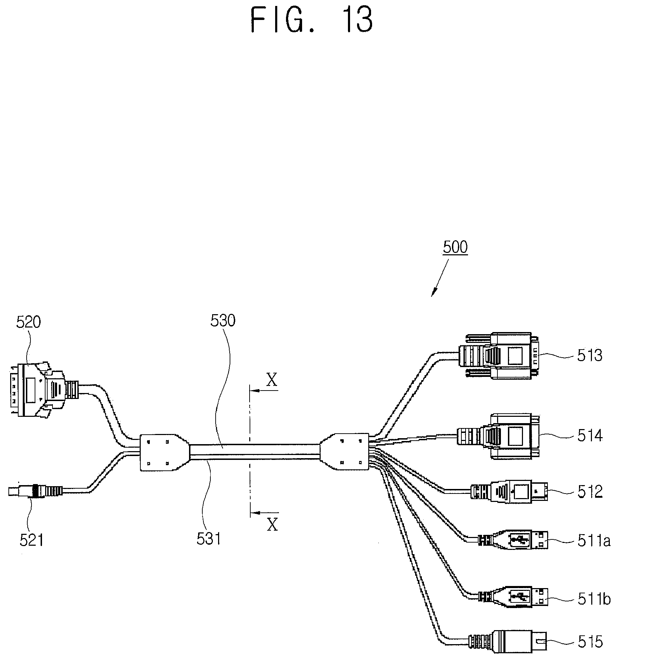

When the MIO power button 376b is selected, the microcomputer 377 recognizes the selection of the MIO power button 376b, and switches the logical value of the signal on a General Purpose Input/Output (GPIO) pin allocated to the microcomputer 377. The GPIO pin is connected with at least one control signal pin of the integrated port 360 and is applied to the computer main body 100. The control signal pin of the integrated port 377, which is connected with the GPIO pin of the microcomputer 377, is applied to an integrated cable 530 (shown in Figure 13) and the computer main body 100 through a main body connector. The GPIO pin of the microcomputer 377 is finally connected with the start up executive part 127, and the start up executive part 127 recognizes the switched logical value of the signal on the GPIO pin of the microcomputer 377.

Herein, the start up executive part 127 starts up the computer system 1 by aeither the main start up mode or the auxiliary start up mode according to the control signal (PWR) from the microcomputer 377 of the console stand 330 and the logical value of the signal on the GPIO pin.

While not required in all aspects, the control module comprises at least one LED 378. The LED 378 is provided on the outside of the console casing 340 and is turned on and off under the control of the microcomputer 377. The microcomputer 377 controls the LED 378 according to the operational state of the computer main body 100, the monitor main body 310 and the console stand 330. For example, the LED 378 shown in Figure 1 comprises an HDD LED 378a, which is turned on and off according to driving of a hard disc drive provided in the computer main body 100, and a power LED 378b, which is turned on and off according to On/Off condition of the power of the computer system 1. The information about the driving of the hard disc drive and On/Off condition of the power of the computer system 1 is applied to the microcomputer 377 from the computer main body 100 through the control signal pin.

The control module of Figure 9 further comprises a wireless signal receiver 379 to receive a wireless signal from a remote controller (not shown). The microcomputer 377 recognizes the wireless signal, such as an infrared (IR) signal and the like received through the wireless signal receiver 379, and transfers the appropriate control signal to the computer main body 100 through the control signal pin of the integrated port 360. The computer main body 100 performs an action, generally preset, based on the control signal corresponding to the wireless signal received through the console connector 520 from the microcomputer 377 of the console stand 330, the integrated cable 530, a control connector 514 and a control port of the main body input-output port.

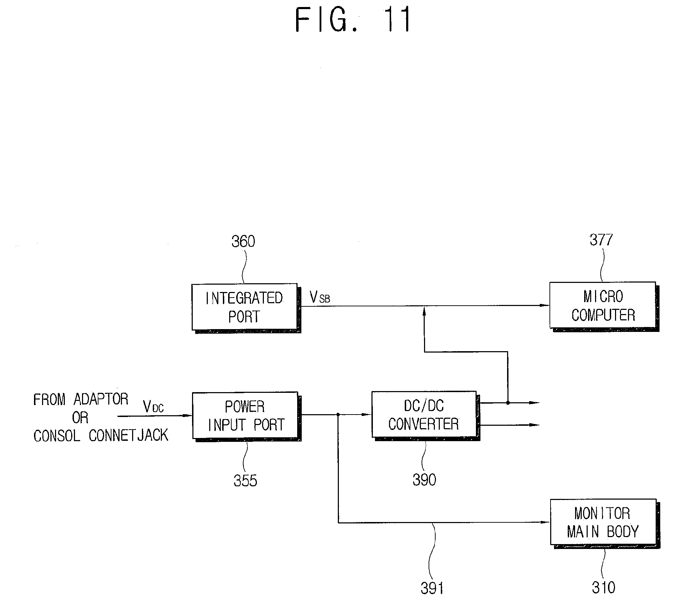

Hereinafter, the power supply system of the console stand 330 according to an aspect of the present invention will be described in detail as reference to Figure 11. The console stand 330 according to the illustrated embodiment of the present invention comprises a power input port 355 to receive DC power. The power input port 355, as shown in Figures 5 and 8, is provided in the rear outside of the console casing 340. The power input port 355 has a DC connect structure of a commercial power adapter (AC/DC). Accordingly, the power input port 355 is connected with the power adapter to enable the console stand 330 to receive DC power. Herein, the power input port 355 is connected with a console connect jack 521 of the main body/console connecting cable 500, thereby receiving the DC power of the predetermined level from the computer main body 100. However, it is understood that the power supply system can further supply the required power to the computer main body 100 through the main body/console connecting cable 500 in order to reduce the number of plugs required to power the system. Moreover, it is understood that the power supply system can include an integrated surge protector and/or battery backup for emergency protection for the system.

The console stand 330 further comprises a DC/DC converter 390 converting and outputting the DC power input from the power input port 355 into a plurality of DC power lines, which have each different voltage level. The allowed voltage level of the DC power input at the DC/DC converter 390 comprises the voltage level of the DC power supplied from the computer main body 100 connected using the console connect jack 520, or the voltage level of the DC power supplied from the commercial power adapter. For example, in the case where the voltage level of the DC power from the computer main body 100 is DC 14V, and the commercial power adapter is DC 12V, the allowed voltage level of the DC/DC converter 390 would comprises DC 12V and DC 14V However, it is understood that other voltage levels can be used according to aspects of the invention.

According to an aspect of the invention, the converted DC power output from the DC/DC converter 390 is supplied to drive each element of the control module. Herein, the DC power outputted from the DC/DC converter 390 may be supplied to the console input-output ports. For example, the DC/DC converter 390 supplies the DC power of the voltage level satisfying the appropriate standard for the corresponding port to a power supply pin, according to the USB interface standard, provided in the console USB ports 351a, 351b, 351c, 351d, 351e among the console input-output ports.

Accordingly, the power supply line on the USB interface standard is removed from the allocated lines for transferring the signal according to the USB interface standard at the main body/console connecting cable 500 and the integrated port 360, thereby reducing thickness of main body/console connecting cable 500 and reducing the number of pins required in the integrated port 360. Further, power from the DC/DC converter can also be applied to the power supply pin on the IEEE 1394 interface standard and the pin for power supply in other interface standard.

The console stand 330 further comprises a monitor power supply line 391 for transferring the DC power input through the power input port 355 to the monitor main body 310. Accordingly, the monitor main body 310 uses the DC power supplied through the power input port 355, and receives the power required to drive the elements thereof (i.e., a back light unit, the display panel, the image processor). Here, the monitor main body 310 comprises an inverter to form the power required to drive, for example a lamp of the back light unit. The monitor main body can also include another DC/DC converter which converts the power supplied through the monitor power supply line 391 into the power required to each electric component of the monitor main body 310.

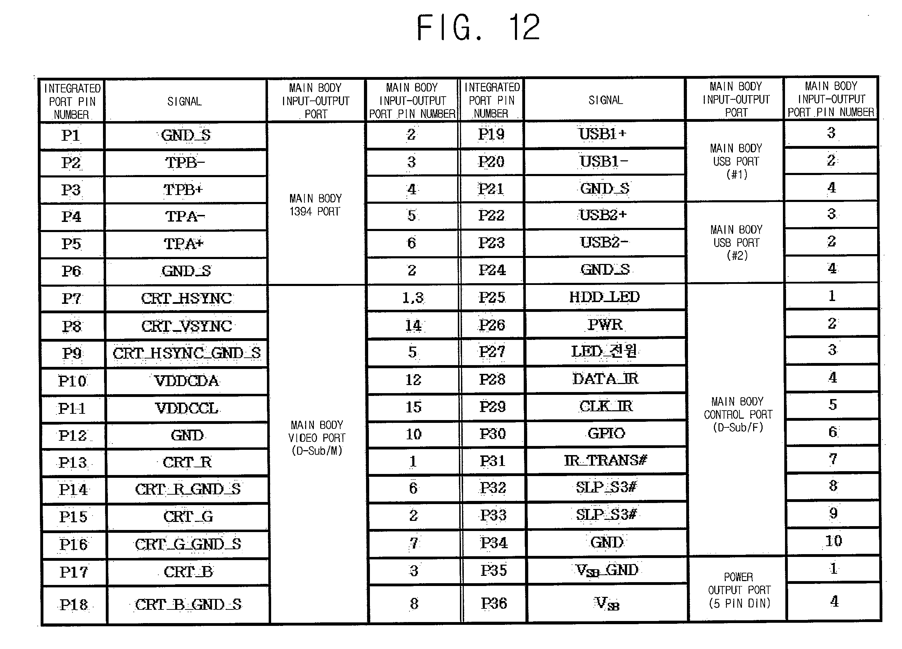

The console stand 330 according to an aspect of the present invention receives standby power of a predetermined voltage level V_{SB} from the computer main body 100 through a standby power input pin of the integrated port 360. The standby power is supplied as the power required to drive the microcomputer 377, and the microcomputer 377 may operate under the supply of the standby power when the power of the computer system 1 or the console stand 330 is off. While not required in all aspects, DC power of the same voltage level as the standby power is supplied by the DC/DC converter 390 such that the standby power is supplied to the microcomputer 377 even in the case that the standby power is not input from the standby power input pins (P35, P36 of Figure 12) of the integrated port 360. It is useful that the conventional computer main body 100 is connected to the console stand 330 according to an aspect of the present invention, and then the standby power is not supplied through the integrated port 360.

As shown in Figure 5, the console stand 330 according to an aspect of the present invention comprises a first printed circuit board (PCB) 392, a second PCB 393, and a third PCB 394 accommodated into the console casing 340. The first PCB 392 is provided with the USB/audio converter 373, the first USB hub 371, and the second USB hub 372. The second PCB 393 is provided with the microcomputer 377, the LED 378, the wireless signal receiver 379, and the booting selection button 376. The third PCB 394 is provided with the ATA controller 375b, and the USB/ATA converter 375c. Accordingly, the elements are divided between the first PCB 392, the second PCB 393, and the third PCB 394 according to how the control module, the console input-output ports and the optical disc module 375 are disposed in the console casing 340 to promote an efficient layout that can minimize the use of space inside the console casing 340. However, it is understood that other arrangements can be used, and that other mechanisms can be used instead of or in addition to the PCBs 392, 393, 394 to arrange the elements inside the case 340.

As shown in Figures 5 and 8, the console stand 330 further comprises a console video port 356 to receive the video signal of a predetermined format. The console video port 356 is provided in the rear outside of the console casing 340, but the disposition of the console video port 356 is not limited herein. The signal format of the video signal input through the console video port 356 may be different from the signal format of the video signal input through the integrated port 360. For example, where the video signal input through the integrated port 360 is an analog Red Green Blue (RGB) signal applied on a D-Sub connector, the console video port 356 may be a Digital Video Interface (DVI) connector of DVI type. Therefore, the signal format of the video signal capable of being output through the monitor main body 310 can be variably adjusted or changed.

Hereinafter, a pin structure of the integrated port 360 according to an aspect of the present invention will be described in detail by reference to Figure 12. As shown in Figure 12, the pin structure of the integrated port 360 includes a 36-pin structure. The illustrated pins of the integrated port 360 comprise video signal receive pins P7 through P18, USB signal pins P19 through P24, 1394 signal pins P1 through P6, control signal pins P25 through P34, and the standby power input pins P35 and P36. The video signal receiving pins P7 through P18 receive the video signal output from the main body video port 110 of the computer main body 100. The video signal receiving pins P7 through P18 are comprised as the pins used to receive the video signal among the pin structure of the D-Sub connector standard (i.e., the 12 pins in Figure 12). The video signals received through the video signal receiving pins P7 through P18 comply with the analog RGB signal format of the D-Sub connector standard. The video signals received through the video signal receiving pins P7 through P18 are transferred to the monitor main body 310 through a signal cable (not shown).

The USB signal pins P19 through P24 comprise first USB signal pins P19 through P21 and second USB signal pins P22 through P24. The first USB signal pins P19 through P21 are connected with the first USB hub 371 of the control module. The second USB signal pins P22 through P24 are connected to the second USB hub 372 of the control module. The first USB signal pins P19 through P21 are connected with one of USB connectors 511a, 511b of the main body connectors of the main body/console connecting cable 500, and the second USB signal pins P22 through P24 are connected with the other one of the USB connectors 511a, 511b of the main body connector of the main body/console connecting cable 500. Accordingly, the USB connectors 511a, 511b of the main body connector of the main body/console connecting cable 500 are connected to the main body USB port 111 of the computer main body 100, respectively, so that the first USB signal pins P19 through P21 and the second USB signal pins P22 through P24 are electrically connected with the computer main body 100.

Here, the first USB signal pins P19 through P21 and the second USB signal pins P22 through P24 are allocated with only the signal line and ground line of the USB interface standard. That is, the first USB signal pins P19 through P21 and the second USB signal pins P22 through P24 are allocated with only two signal pins P19, P20, P22, P23, respectively, and one ground pin P21, P24, respectively. As such, each of the first USB signal pins P19 through P21 and the second USB signal pins P22 to P24 use three pins for the signal and ground pins. The power supply on the USB interface standard to the external device, which is connected to the console USB ports 351a, 351b, 351c, 351d, 351e of the console stand 330, may come from the DC/DC converter 390 of the console stand 330, or be supplied through the first USB hub 371 or the second USB hub 372.

The 1394 signal pins P1 through P6 are electrically connected with the computer main body 100, in the case where 1394 signal pins P1 through P6 are connected with the 1394 connector 512 of the main body connector of the main body/console connecting cable 500, and the 1394 connector 512 is connected to the main body 1394 port 112 of the computer main body 100. Herein, four signal pins P2 through P5 and two ground pins P1, P6 are allocated as the 1394 signal pins P1 through P6.

While not required in all aspects, the control signal pins P25 through P34 may be allocated with ten signal pins. The control signal pins P25 through P34 are allocated with two main body information pins P25, P27 for transferring the information about the operational state of the computer main body 100 transferred from the computer main body 100, (i.e., the information about the driving state of the hard disc drive and the information about the on/off state of the computer system 1) to the console stand 330. The main body information pins P25, P27 are connected to the microcomputer 377 of the console stand 330, and the microcomputer 377 controls switching on and off the LED 378 according to the operation state of the computer main body 100 received from the main body information pins P25, P27.

Further, while not required in all aspects, the control signal pins P25 through P34 comprise a PWR pin P26 for transferring the control signal corresponding to the selection of the booting selection button 376 output from the microcomputer 377 to the computer main body 100, and a GPIO pin P30 connected with the GPIO pin of the microcomputer 377.

While not required in all aspects, the control signal pins P25 through P34 are allocated with three IR pins P28, P29, P31 for transferring the control signal corresponding to the wireless signal received from the wireless signal receiver 379 to the computer main body 100. Herein, two IR pins P28 and P29 among the IR pins P28, P29, P31 are allocated to transmit of the data, and one of the remaining IR pins (i.e., P31) is allocated as the signal for controlling to process the signal of a remote controller prior to the signal of the keyboard 10 or the mouse 20 input to the computer main body 100, in case the signal from the wireless signal receiver 379, (i.e., the signal from the remote controller) is received.

Further, while not required in all aspects, the control signal pins P25 through P34 comprise two power-saving mode pins P32, P33 to receive information about whether the computer main body 100 has entered a power-saving mode, from the computer main body 100. One of the power-saving mode pins P32, P33 is allocated to inform that the system is converted into a S3 mode (i.e., standby mode) of an Advanced Configuration and Power Interface (ACPI), from the computer main body 100 to the microcomputer 377 of the console stand 330. The other one is allocated to inform that the system is converted into a S4 mode (i.e., power-saving mode) of the ACPI, from the computer main body 100 to the microcomputer 377 of the console stand 330. The microcomputer 377 interrupts the power which is supplied to the monitor main body 310, the control module or the optical disc module 375, according to a corresponding mode.

One of the control signal pins P25 through P34 is allocated as the ground pin P34. Further, the standby power input pins P35, P36 are allocated with two pins of the integrated port 360. One of the standby power input pins P35, P36 is allocated as the pin P35 for the standby power supply, and the other one is allocated as the ground pin P35. Herein, each pin number of the integrated port 360 illustrated in Figure 12 may be changed or reconfigured according to aspects of the invention.

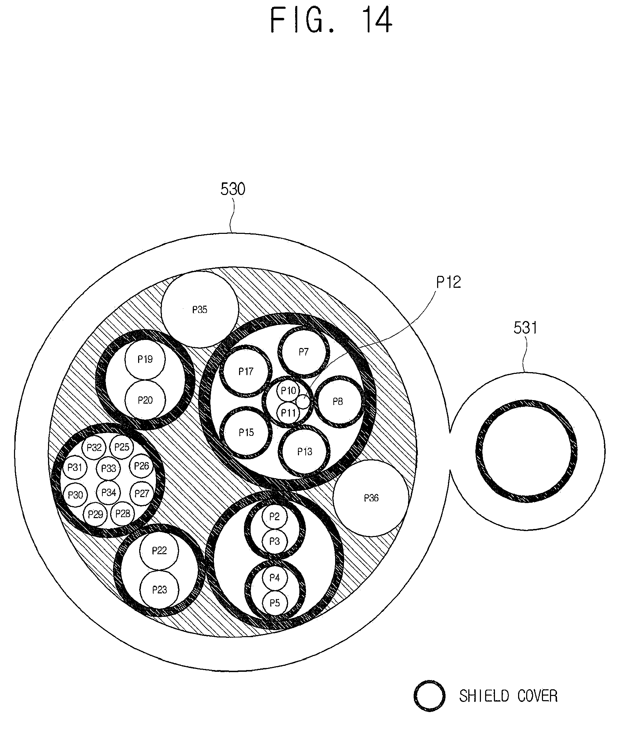

The main body/console connecting cable 500 shown in Figures 13 and 14 comprises the plurality of main body connectors, which are respectively connected to the plurality of main body input-output ports, the console connector 520 connected to the integrated port 360 of the console stand 330, and the integrated cable 530 electrically connecting the plurality of main body connectors and the console connector 520. The console connector 520 has a connect structure capable of connecting to the integrated port 360 of the console stand 330, and the pin structure of the console connector 520 corresponds to the pin structure of the foregoing integrated port 360.

While not required in all aspects, the main body connector comprises a video connector 513, two USB connectors 511a, 511b, the 1394 connector 512, and the control connector 514 respectively connected to the main body video port 110, two main body USB ports 111, the main body 1394 port 112, and the main body control port 113, which are provided in the computer main body 100.

The video connector 513 has a connect structure according to the D-Sub connector standard, and the USB connectors 511a, 511b and the 1394 connector 512 have the connect structures of the USB interface standard and the IEEE 1394 interface standard, respectively. Therefore, if the computer main body 100 does not provide a respective port for connecting with the console stand 330, a commercially available input-output may be used. Further, the console stand 330 according to aspects of the present invention can connect with a commercially available computer main body as well as the illustrated computer main body 100 according to the present invention through the main body/console connecting cable 500, thereby enhancing compatibility.

The control connector 514 has a structure enabling it to connect to the main body control port 113 provided in the computer main body 100. The control connector 514 and the main body control port 113 have the connect structure of the D-Sub connect according to an aspect of the invention. That is, the control connector 514 and the main body control port 113 have the connect structure of a D-Sub female connector and a D-Sub male connector comprising fifteen pins, respectively. As shown, the main body control port 113 has the connect structure of the D-Sub male connector, and the control connector 514 has the connect structure of the D-Sub female connector. Accordingly, where the main body video port 110 has the connect structure of the D-Sub female connector, the main body control port 113 is provided as the connect structure of the D-Sub male connector, thereby preventing a user from incorrectly connecting the video connector 513 and the control connector 514 to the main body video port 110 and the main body control port 113.

The video connector 513, two USB connectors 511a, 511b, the 1394 connector 512, and the control connector 514 are connected to the console connector 520 via the integrated cable 530. The connecting relationship of each pin of the video connector 513, two USB connectors 511a, 511b, the 1394 connector 512, and the control connector 514 and each pin of the console connector 520 is illustrated in Figure 12. The pin numbers of the console connector 520 correspond to the pin numbers of the foregoing integrated port 360, and the pin numbers of the main body input-output port respectively correspond to the pin numbers on the D-Sub connector standard, the USB interface standard, and the IEEE 1394 interface standard.

Meanwhile, as shown in Figure 13, the integrated cable 530 is such that each pin of the video connector 513, two USB connectors 511a, 511b, the 1394 connector 512, and the control connector 514 is connected with each pin of the console connector 520. Figure 14 is a cross-sectional view of the integrated cable 530 according to the present invention. Referring to Figure 14, the integrated cable 530 comprises a plurality of unit signal lines which connect each pin of the console connector 520 with at least some of the pins of the video connector 513, the USB connectors 511a, 511b, the 1394 connector 512, and the control connector 514. The reference numerals indicated in each unit signal line of Figure 14 correspond to the pin numerals of the integrated port 360 of Figure 12.

A shield cover shields each unit signal line of the integrated cable 530 and/or the unit signal lines with the predetermined numbers. At least one of the ground pins P1, P6, P9, P12, P14, P16, P18, P21, P24, P34, P35 among the pins of the console connector 520 corresponding to the integrated port 360 illustrated in Figure 12 may be grounded on the shield cover without allocating of the unit signal lines P12, P34 for a special ground in the integrated cable 530. The shield cover can shield the unit signal lines of the integrated cable 530 by a unit of the unit signal lines. That is, the unit signal lines connect the video connector 513 and the video signal receiving pins P7 through P18, the unit signal lines connect each input-output connector 34, 35a, 35b and the signal pin for the input-output (i.e., connecting the USB pins P19 through P24 and the 1394 pins P1 through P6), and unit signal lines connect the control connector 514 and the control pin.

For example, referring to Figure 14, one shield cover shields the unit signal lines connecting the video connector 513 and the video signal receiving pins P7 through P18 by binding them. Further, the unit signal lines connecting the video connector 513 and the video signal receiving pins P7 through P18 are shielded by different shield covers separately or as tying into a few bundles within the one shield cover.

The unit signal lines connecting one of the USB connectors 511a, 511b and the first USB pins P19 through P21 and the unit signal lines connecting the other one of the USB connectors 511a, 511b and the second USB pins P22 through P24 are bundled respectively and shielded by a shield cover one by one. The unit signal lines connecting the 1394 connector 512 and the 1394 pin P1 through P6 are bundled in pairs respectively and are shielded by two shield covers, with the bundled pairs being shielded by another shield cover. The unit signal lines connecting the control connector 514 and the control pins P25 through P34 are shielded by one shield cover.

One ground pin P12 of the video signal receiving pins P7 through P18 of the console connector 521 and the unit signal line for ground about the ground pin P35 of the standby power pins P35, P36 are allocated to the unit signal line of the integrated cable 530. Therefore, the number of the unit signal lines for ground of the integrated cable 530 is decreased, thereby decreasing the thickness of the integrated cable 530.

Further, as shown in Figures 13 and 14, the main body/console connecting cable 500 further comprises a main body connect jack 515 connected to the power output port 114 provided in the computer main body 100, a console connect jack 521 connected to the power input port 355 provided in the console stand 330, and a DC power cord 531 which connects the main body connect jack 515 and the console connect jack 521and supplies the DC power output from the computer main body 100 through the power output port 114 to the console stand 330 through the power input port 355.

The console connect jack 521 can connect to the power input port 355 provided in the console stand 330, with a DC connect structure of a commercially available power adapter. The main body connect jack 515 has a connect structure of a five pins DIN connector connect structure. Correspondingly, a power output port 114 of the computer main body 100 has the connect structure of the five pins DIN connector. The standby power input pins P35, P36 for supplying the standby power, which is supplied to the console stand 330 through the integrated port 360, are connected with a first pin and a fourth pin on the connect structure of the five pins DIN connector connect structure. The power input port 355 of the console stand 330 is connected with a second pin and a fifth pin on the connect structure of the five pins DIN connector. The console jack 521, the connect jack 515, and the DC power cord 531 are shielded as shown in Figure 14.

While examples of the present invention are illustrated using standards for memory cards and data connections, it is understood that the present invention can include existing wireless standards (such as wireless standards including WiFi and Bluetooth), and can include other standards including later developed proprietary and non-proprietary standards so as to be usable with a plurality of data storage and/or interfaces through a common casing. Moreover, while shown without such amenities, it is understood that additional items (such as keyboard holders, paper holders, docks for audio/video players and cameras, and organizers) can be added so as to reduce desk clutter in a single casing and/or to improve the ergonomics for the resulting computer system. Also, it is understood that one or more of the signal lines of the integrated cable could be implemented wirelessly in order to reduce a thickness of the cable and/or to communicate with remote devices, such as printers. Lastly, it is understood that the console stand can be separately provided so to provide a universal interface between different monitors and computers and/or a docking station.

It will be apparent to those skilled in the art that various modifications and variation can be made in the present invention without departing from the scope of the invention, as defined by the appended claims. Thus it is intended that the present invention cover the modifications and variations of this invention provided they come within the scope of the appended claims.

## Claims

1. A computer system, comprising:
a computer main body having a plurality of main body input-output ports;
a monitor main body which displays an image generated by the computer main body;
a console stand having a console casing with an accommodating space inside and supporting the monitor main body, a plurality of console input-output ports provided outside the console casing and connectable with corresponding external devices, an integrated port provided outside the console casing, and a control module controlling an interface between the integrated port and the console input-output ports; and
a main body/console cable having a plurality of main body connectors respectively connected to the plurality of main body input-output ports, a console connector connected to the integrated port, and an integrated cable electrically connecting the plurality of main body connectors and the console connector so as to interconnect the monitor main body, the computer main body, and the console input-output ports through the console stand.

2. The computer system according to claim 1, wherein the console input-output ports comprises one or more console USB ports of a USB interface standard, one or more console 1394 ports of an IEEE 1394 interface standard, one or more console audio input-output ports to input and output of an audio signal and one or more console memory card slots connected with a memory card of a predetermined standard, or combinations thereof.

3. The computer system according to claim 2, wherein the control module comprises:
a USB hub which controls a signal exchange according to the USB interface standard through the one or more console USB ports and the one or more console 1394 ports; and
a USB/audio converter which converts a signal between a USB interface standard and an audio standard such that a signal of the USB interface standard output from the USB hub is converted into an audio signal and the audio signal is output through the one or more console audio input-output ports, and the audio signal input through the one or more console audio input-output ports is converted into the signal according to the USB interface standard and the signal is output to the USB hub.

4. The computer system according to claim 3, wherein the control module further comprises an optical disc module accommodated inside the console casing and exchanging the signal with the USB hub through the USB interface standard.

5. The computer system according to claim 4, wherein the optical disc module comprises:
an optical disc drive which receives and transfers data with respect to an optical disc;
an ATA controller forming data read by the optical disc drive to the signal of an ATA interface standard; and
a USB/ATA converter to convert between a signal of the ATA interface standard of the ATA controller and a signal of the USB interface standard of the USB hub.

6. The computer system according to claim 5, wherein:
the main body input-output port comprises a main body video port output with a video signal transferred to the monitor main body, one or more main body USB ports of the USB interface standard, one or more main body 1394 ports of the IEEE 1394 interface standard, and one or more main body control ports to input and output a predetermined control signal; and
the main body connector console cable comprises one or more video connectors connected to the main body video port, one or more USB connectors connected to the one or more main body USB ports, one or more 1394 connectors connected to the one or more main body 1394 ports, and one or more control connectors connected to the one or more main body control ports.

7. The computer system according to claim 6, wherein the main body control port and the control signal connector have a connect structure of a D-Sub connector standard having 15 pins.

8. The computer system according to claim 6, wherein:
the integrated cable comprises a plurality of unit signal lines connected to the pins used to transfer the signal between each pin of the video connector, the USB connector, and the 1394 connector, and the control connector; and
the console connector comprises a plurality of signal pins respectively connected to the plurality of unit signal lines.

9. The computer system according to claim 8, wherein at least one of the unit signal lines is allocated to transfer a standby power of a predetermined voltage level supplied from the computer main body to the console stand.

10. The computer system according to claim 8, wherein:
the integrated cable further comprises a shield cover shielding the plurality of unit signal lines; and
each of the video connector, the USB connector, the 1394 connector, and the control signal connector comprise a ground pin grounded on the shield cover.

11. The computer system according to claim 6, wherein:
the computer main body comprises a power supplier and a power output port which outputs DC power of a predetermined voltage level;
the console stand further comprises a power input port to receive the DC power output from the power output port; and
the main body/console cable further comprises a main body connect jack connected to the power output port, a console connect jack connected to the power input port, and a DC power cord connecting the main body connect jack and the console connect jack and supplying the DC power output from the computer main body through the power output port to the console stand through the power input port.

12. The computer system according to claim 11, wherein the power input port of the console stand and the console connect jack of the main body/console connecting cable have a DC connect structure of a commercial power adapter.

13. The computer system according to claim 11, wherein the console stand further comprises a monitor power supply line for transferring the DC power input through the power input port to the monitor main body.

14. The computer system according to claim 11, wherein the console stand further comprises a DC/DC converter converting the DC power input through the power input port into a plurality of DC power lines with different voltage levels and supplying the plurality of DC power lines to at least the control module and/or the console input-output port.

15. The computer system according to claim 14, wherein the voltage level of the DC power input to the DC/DC converter comprises a voltage level of the DC power output from the power output port and a voltage level of the DC power output from the commercial power adapter.

16. The computer system according to claim 6, wherein the control module further comprises:
at least one booting selection button provided outside the console casing; and
a microcomputer transferring a control signal corresponding to a selection input using the booting selection button to the computer main body through the main body/console cable.

17. The computer system according to claim 16, wherein:
the computer main body further comprises a start up executive part to start up the computer main body, the monitor main body, the console stand or combinations thereof according to one of a plurality of start up routines with respect to a plurality of start up modes;
the microcomputer comprises a general purpose input output (GPIO) pin connected to the start up executive part through the integrated port, the console connector, the integrated cable, the control connector, and the main body control port; and
the microcomputer applies the appropriate control signal to the start up executive part through the GIPO pin, where a preset one of the plurality of start up modes is selected through the booting selection buttons, and the start up executive part starts up the computer main body, the monitor main body, the console stand, or combinations thereof according to the start up routines corresponding to the control signal from the GIPO pin of the microcomputer.

18. The computer system according to claim 16, wherein:
the control module further comprises at least one LED provided outside the console casing and which is switched between on and off; and
the microcomputer controls switching the LED between on and off according to an operating state of the computer main body, the monitor main body, the console stand, or combinations thereof.

19. The computer system according to claim 18, wherein:
the control module further comprises a wireless signal receiver to receive a wireless signal; and
the microcomputer transfers the control signal corresponding to the wireless signal received through the wireless signal receiver to the computer main body through the integrated port, the console connector, the integrated cable, the control connector, and the main body control port.

20. The computer system according to claim 19, wherein the console stand further comprises:
a first printed circuit board accommodated in the console casing and which includes one or more USB/audio converters and the USB hubs;
a second printed circuit board accommodated in the console casing and which includes the microcomputer, the LED, the wireless signal receiver, and the booting selection button; and
a third printed circuit board accommodated in the console casing and which includes the ATA controller and/or the USB/ATA converter.

21. The computer system according to claim 6, wherein:
the console stand further comprises a console video port to receive a video signal of a predetermined format; and
the format of the video signal input through the console video port is different from a format of the video signal input through the integrated port.

22. The computer system according to claim 6, wherein the console casing comprises:
a lower case;
an upper case coupled to the lower case from an upper part of the lower case and forming an accommodation space housing the control module and the optical disc module;
a link member having a first side fastened to the monitor main body and a second side fastened to the lower case and supporting the monitor main body; and
a rear cover formed with a pass through hole allowing the link member to pass through to fasten at the lower case, and covering a rear upper part of the lower case.

23. The computer system according to claim 22, further comprising:
a speaker grill provided in the rear cover; and
a speaker disposed inside the speaker grill of the rear cover and outputting the audio signal from the USB/audio converter.

24. The computer system according to any preceding claim, wherein the control module further comprises an optical disc module accommodated inside the console casing and communicating through an interface between the integrated port and the console input-output ports.

25. A display apparatus capable of connecting with an external device for a computer main body, comprising:
a monitor main body which displays an image;
a console casing supporting the monitor main body;
a plurality of console input-output ports provided outside the console casing and connectable to the external device;
an integrated port provided outside the console casing and which inputs and outputs a predetermined signal comprising a video signal applied from the computer main body; and
a control module transferring the video signal received through the integrated port of the monitor main body, and outputting a signal input from the computer main body through the integrated port to the external device connected to one of the plurality of console input-output ports, and outputting a signal input from the external device connected to the console input-output ports to the computer main body through the integrated port.

26. The display apparatus according to claim 25, wherein the console input-output ports comprise one or more console USB ports of a USB interface standard, one or more console 1394 ports of an IEEE 1394 interface standard, one or more console audio input-output port to input and output an audio signal, and one or more console memory card slots connectable to a memory card of a predetermined standard.

27. The display apparatus according to claim 26, wherein the control module comprises:
at least one USB hub controlling a signal exchange according to the USB interface standard through the one or more console USB ports and/or the one or more console 1394 ports; and
a USB/audio converter converting a signal of the USB interface standard output from the USB hub into the audio signal and outputting the audio signal through the console audio input-output port, and converting the audio signal input through the console audio input-output port into the signal of the USB interface standard and outputting the signal to the at least one USB hub.

28. The display apparatus according to claim 27, wherein the control module further comprises an optical disc module accommodated inside the console casing and exchanging the signal through the at least one USB hub and the USB interface standard.

29. The display apparatus according to claim 28, wherein the optical disc module comprises:
an optical disc drive to transfer data with respect to an optical disc;
an ATA controller forming data read by the optical disc drive into a signal of an ATA interface standard; and
a USB/ATA converter to convert between the signal of the ATA interface standard of the ATA controller and the signal of the USB interface standard of the at least one USB hub.

30. The display apparatus according to claim 29, wherein:
the integrated port comprises a plurality of video signal receiving pins to receive the video signal, a plurality of USB signal pins to input and output the signal according to the USB interface standard, and at least one control signal pin to input and output a predetermined control signal between the control module and the computer main body, and
one or more of the video signal, the signal according the USB interface standard, and the control signal are grounded on a shield cover of a predetermined integrated cable connected to the integrated port.

31. The display apparatus according to claim 30, wherein the integrated port comprises at least one standby power input pin to receive standby power of a predetermined voltage level supplied from the computer main body.

32. The display apparatus according to claim 31, further comprising:
a power input-output port provided outside the console casing and receiving DC power of the predetermined level;
a DC/DC converter converting the DC power input through the power input port into a plurality of DC power lines with different voltage levels each other, and supplying the plurality of DC power lines to at least the control module and/or the console input-output port; and
a monitor power supply line for transferring the DC power input through the power input port to the monitor main body.

33. The display apparatus according to claim 32, wherein the power input port has a DC connect structure of a commercial power adapter.

34. The display apparatus according to claim 30, wherein the control module further comprises:
at least one booting selection button provided outside the console casing; and
a microcomputer transferring the control signal input using the at least one booting selection button to the computer main body through the integrated port.

35. The display apparatus according to claim 34, wherein the microcomputer comprises a general purpose input output (GPIO) pin to reverse a logical value when a preset one of start up modes of the computer main body is selected through the booting selection button, and the GPIO pin is connected to one of the control signal pins of the integrated port.

36. The display apparatus according to claim 34, wherein:
the control module further comprises at least one LED provided outside the console casing; and
the microcomputer receives information with respect to an operating state of the computer main body through the integrated port, and controls the LED to be switched between on and off according to the operating state of the computer main body, the monitor main body, the console stand, or combinations thereof.

37. The display apparatus according to claim 36, wherein:
the control module further comprises a wireless signal receiver to receive a wireless signal; and
the microcomputer transfers the control signal corresponding to the received wireless to the computer main body through the integrated port.

38. The display apparatus according to claim 37, further comprising:
a first printed circuit board accommodated in the console casing and which includes the USB/audio converter and the USB hub;
a second printed circuit board accommodated in the console casing and which includes the microcomputer, the LED, the wireless signal receiver, and the booting selection button; and
a third printed circuit board accommodated in the console casing and the ATA controller and/or the USB/ATA converter.

39. The display apparatus according to claim 30, wherein:
the console stand further comprises a video port to receive a video signal of a predetermined format; and
the format of the video signal input through the video port is different from a format of the video signal input through the integrated port.

40. The display apparatus according to claim 30, wherein the console casing comprises:
a lower case;
an upper case coupled to the lower case from an upper part of the lower case and forming an accommodation space housing the control module and the optical disc module;
a link member having a first side fastened to the monitor main body and a second side fastened to the lower case and supporting the monitor main body; and
a rear cover having a pass through hole allowing the link member to pass through to fasten to the lower case and covering a rear upper part of the lower case.

41. The display apparatus according to claim 40, further comprising:
a speaker grill provided on the rear cover, and
a speaker disposed inside the speaker grill of the rear cover and outputting the audio signal from the USB/audio converter.

42. A display apparatus according to any one of claims 25 to 41, wherein the control module further comprises an optical disc module accommodated inside the console casing and communicating through an interface between the integrated port and the console input-output ports.

43. A main body/console connecting cable for use in connecting a display device, connecting an external device of a predetermined interface standard, and a computer main body, the cable comprising:
a main body connector having a video connector connectable to the computer main body and which receives a video signal on a predetermined video standard output from the computer main body, at least one input-output connector of a predetermined input-output interface standard connectable to the computer main body, and a control connector for which exchanges a predetermined control signal between the computer main body and the display device;
a console connector having a plurality of video signal pins connectable to the display device, a plurality of input-output signal pins connectable between the input-output connector and the display device, and a plurality of control pins connectable to the display device; and
an integrated cable having a plurality of unit signal lines connectable between the main body connector and the console connector, and a shield cover which shields the unit signal lines and is grounded with at least one of ground pins allocated on the console connector and the main body connector, wherein the unit signal lines connect the video connector and the video signal pins, the at least one input-output connector and the input-output signal pins, and the control connector and the control pins.

44. The main body/console connecting cable according to claim 43, wherein:
the input-out connector comprises a signal pin of the input-output interface standard, a power supply pin, and a ground pin;
one of the input-output signal pins of the console connector is allocated to only correspond to the signal pin of the input-output connector, and
another one of the input-output signal pins of the console connector is allocated only to correspond to the ground pin of the input-output connector.

45. The main body/console connecting cable according to claim 44, wherein reserved pins according to each standard of the video connector and the input-output connector are not allocated to the pin of the console connector.

46. The main body/console connecting cable according to claim 45, further comprising a main body connect jack connectable to the computer main body, a monitor connect jack connectable to the display device, and a DC power cord capable of supplying DC power of a predetermined voltage level output from the computer main body to the display device.

47. The main body/console connecting cable according to claim 46, wherein:
the shield cover shields the unit signal lines connecting between the video connector and the video signal pins,
the unit signal lines between the input-output connector and the input-output signal pins, and
the unit signal lines between the connector and the control pins, by a unit of the unit signal lines.

48. The main body/console connecting cable according to claim 43, wherein the input-output connector comprises at least one of at least one USB connector of the USB interface standard and/or the 1394 connector of the IEEE 1394 interface.

49. The main body/console connecting cable according to claim 48, wherein the video connector has a connect structure of a D-Sub connector standard.

50. The main body/console connecting cable according to claim 48, wherein the control connector has a connect structure of a D-Sub connector standard.

51. A computer system interconnection device, comprising:
a console casing having an integrated port and console input-output ports of different types and which are connectable with corresponding external devices and/or storage devices;
a control module inside the console casing and controlling data exchanged between the integrated port and the console input-output ports; and
a cable connected to the integrated port and connectable with a computer, the cable having a plurality of main body connectors connectable to main body input-output ports of different types of the computer, a console connector connected to the integrated port, and an integrated cable electrically connecting the main body connectors and the console connector so as to interconnect the computer and the console input-output ports.

52. The computer system interconnection device of claim 51, wherein the input-output port types are combinations of ports of different standards so as to be compatible with at least two interface standards.

53. The computer system interconnection device of claim 52, wherein the different standards comprise combinations of a USB standard, an IEEE 1394 standard, a data memory medium standard, an audio standard, a video standard, and a display monitor standard.

54. The computer system interconnection device of claim 53, wherein the control module further comprises:
a hub of one of the different standards and which transfers data with respect to a plurality of the console input-output ports and the integrated port, and
a controller that controls the data transfers between the integrated port and the hub.

55. The computer system interconnection device of claim 54, wherein the hub is compliant with the USB standard.

56. The computer system interconnection device of claim 53, wherein:
one of the console input-output ports comprises a drive which receives a data memory medium,
another one of the console input-output ports is an interface of one of the USB and the IEEE 1394 standards, and
a further one of the console input-output ports is an interface of one or more of the audio standard, the video standard, and the display monitor standard.

57. The computer system interconnection device of claim 51, wherein:
the console casing further comprises a display support connectable to a display, and
one of the console input-output ports is connectable to the display such that display signals from the computer are sent through the cable to be displayed on the display.

58. The computer system interconnection device of claim 51, wherein the console casing further comprises a power supply controller which controls the computer to be turned on when in a first state and turned off when in a second state.

59. The computer system interconnection device of claim 58, wherein the power supply controller further receives power from the computer through the integrated port.

60. The computer system interconnection device of claim 59, wherein the power supply controller further controls a display to be turned on when in a third state and turned off when in a fourth state using the power received from the computer.

61. The computer system interconnection device of claim 60, wherein: the console casing further comprises a display support connectable to the display, and
one of the console input-output ports is connectable to the display such that display signals from the computer are sent through the cable to be displayed on the display.

62. The computer system interconnection device of claim 56, wherein the console casing further comprises an audio interface unit which transfers audio data between an audio device and the computer.

63. The computer system interconnection device of claim 62, wherein the audio device comprises a speaker which outputs the audio data, a headphone jack which outputs the audio data, and/or an microphone which inputs the audio data into the computer.

64. A display apparatus for connecting a computer peripheral deice (10, 20, 30, 40) to a computer (100), comprising:
a monitor (310) for displaying an image;
a monitor housing (330) for the monitor;
a plurality of first ports (351a - 351e, 352, 353a, 353b, 354a - 354c, 356) provided to the monitor housing (330) and connectable to the peripheral device (10, 20, 30, 40);
a second port (360) provided to the monitor housing (330) and connectable to the computer (100); and
a control module for controlling communications between the peripheral device (10, 20, 30, 40), the computer (100) and the monitor (310).
